# EUROPÄISCHE PATENTSCHRIFT

(11) **EP 1 914 383 B1**
(45) Veröffentlichungstag und Bekanntmachung des Hinweises auf die Patenterteilung: **08.06.2016**
(21) Anmeldenummer: 07117952.7
(22) Anmeldetag: 05.10.2007
(51) Int. Cl.: F01D 5/28, F01D 5/14, F01D 5/30

(54) **Fanschaufel aus Textilverbundwerkstoff**
Fibre reinforced composite fan blade
Aube de soufflante en matériau composite

(30) Priorität: 18.10.2006 DE 102006049818
(43) Veröffentlichungstag der Anmeldung: 23.04.2008
(73) Patentinhaber: Rolls-Royce Deutschland Ltd & Co KG, 15827 Blankenfelde-Mahlow (DE)
(72) Erfinder: Schreiber, Karl, 15838, Am Mellensee (DE); Hufenbach, Werner, Prof. Dr.-Ing, 01324 Dresden (DE); Langkamp, Albert, Dr.-Ing., 01324 Dresden (DE); Ebert, Christoph, Dipl.-Ing., 01324 Dresden (DE)

(56) Entgegenhaltungen:
- DE-A1- 2 240 970
- US-A- 3 664 764
- US-A- 4 040 770
- US-A- 5 573 377
- US-B1- 6 290 466

## Beschreibung

Die Erfindung bezieht sich auf eine Fanschaufel aus einem Textilverbundwerkstoff für das Gebläse eines Gasturbinentriebwerks gemäß den Merkmalen des Oberbegriffes des Patentanspruches 1

Es ist bereits bekannt, die Fanschaufeln von Turbofan-Gasturbinentriebwerken unter Verwendung von mit einer metallischen Umhüllung versehenen Textilverbundmaterial, das heißt, einer Vielzahl in Kunststoff eingebetteten Faserschichten, herzustellen. Üblicherweise sind Fanschaufeln aus Textilverbundwerkstoffen mit Blech ummantelt oder zumindest ist die Vorderkante aus Titan gebildet. Über einen schwalbenschwanzartig geformten Schaufelfuß ist die Schaufel in einer entsprechend angepassten Ausnehmung am Außenumfang einer Rotorscheibe befestigt.

Durch hohe Geschwindigkeit an der Schaufelspitze bedingte hohe Fliehkräfte, Gasdruck, von dem strömenden Medium angeregte Schwingungen oder auftreffende Fremdkörper werden die Schaufeln extrem belastet. Die dabei auftretenden hohen Zugkräfte müssen vom Schaufelblatt aufgenommen und in den Schaufelfuß geleitet werden und letztlich von der Rotorscheibe aufgenommen werden. Aufgrund der verminderten Packungsdichte der Faserschichten in dem gegenüber dem Schaufelblatt schwalbenschwanzförmig erweiterten Schaufelfuß können die in diesem Bereich wirkenden Druckkräfte nicht zwischen den Faserschichten übertragen werden und es kann daher zu einer Delamination der Faserschichten im Schaufelfuß kommen. Eine sichere Befestigung der Fanschaufeln am Umfang der Rotorscheibe ist daher nicht gewährleistet.

Bei einer aus US 40 40 770 bekannten, aus einem Fasermaterial gebildeten Verdichterschaufel sind im Bereich des schwalbenschwanzartig geformten Schaufelfußes zwischen den Faserschichten Versteifungskeile aus einem homogenen Material, beispielsweise Titan, angeordnet, um in diesem hochbelasteten Bereich eine lasttragende Struktur auszubilden. An der Außenseite des Schaufelfußes ist zum Schutz der Faserschichten und zur Erzielung einer gleichmäßigen Kraftübertragung zwischen Schaufelfuß und Rotorscheibe eine Auflage aus dem gleichen homogenen Material vorgesehen.

Gemäß DE 103 26 719 ist in den aus einer Vielzahl von in ein Kunstharz eingebetteten Kohlenstofffaserschichten bestehenden Faserverbundkern des mit einer metallischen Umhüllung versehenen Schaufelfußes ein von dessen Boden ausgehender Versteifungskeil eingebunden. Der Versteifungskeil teilt den Faserverbundkern in Längsrichtung des Schaufelfußes in zwei Teilstränge, um in dem gegenüber dem Schaufelblatt erweiterten Bereich dennoch eine hohe Festigkeit zu gewährleisten und die am Schaufelblatt wirkenden hohen Zugkräfte effektiv in den Schaufelfuß einleiten zu können.

Die metallischen Keile und die metallische Umhüllung beeinflussen in erheblichen Maß das Gewicht der Schaufeln. Außerdem bereitet die Befestigung der Versteifungskeile im Schaufelfuß Schwierigkeiten. Die Versteifungskeile können sich lösen, so dass die Kraftübertragung und sichere Halterung der Schaufeln nicht gewährleistet ist. Darüber hinaus verursachen sie kritische Spannungsüberhöhungen.

Bei Turbofan-Gasturbinentriebwerken besteht zur Gewichtsund Kostenverminderung und Erhöhung des Wirkungsgrades zudem die Zielstellung, den aus Faserverbundmaterial bestehenden Fan bei möglichst großer Spitzengeschwindigkeit und dennoch geringer Baugröße zu betreiben. Hierzu ist eine entsprechend hohe Festigkeit des Faserverbundmaterials, insbesondere in dem die Kräfte aufnehmenden Schaufelfuß erforderlich.

Aus US-A-5,573,377 und US-A-3,664,764 sind Fanschaufeln der eingangs genannten Art vorbekannt, bei denen aufgrund der Bauart keine hohe Festigkeit und keine sichere Übertragung der an der Schaufel wirkenden Kräfte in die Rotorscheibe und damit keine sichere Halterung und keine lange Lebensdauer der Fanschaufeln gewährleistet ist.

Der Erfindung legt von daher die Aufgabe zugrunde, eine Fanschaufel aus Textilverbundwerkstoff für das Gebläse eines Gasturbinentriebwerkes der eingangs genannten Art zu schaffen, bei welcher diese Nachteile behoben sind.

Weitere Merkmale und vorteilhafte Weiterbildungen der Erfindung ergeben sich aus den Unteransprüchen.

Gemäß der Erfindung umfasst die Schaufel eine Vielzahl von Kohlenstofffaserlagen mit zur Gestaltung des Schaufelfußes in dem aufgefächerten Bereich der Kohlenstofffaserlagen angeordneten Kohlenstofffaserzwischenschichten sowie an den Außenflächen des Schaufelfußes vorgesehenen Glasfaseraußenschichten. Die Kohlenstofffaserlagen bilden ausgehend von den im Schaufelblatt parallel zur Blattachse verlaufenden Kohlenstofffaserlagen eine sich im Schaufelfuß verjüngende Schaufelblattwurzel und einen beidseitigen Übergangsbereich mit einer äußeren kraftgerechten Übergangszone zum biegespannungsarmen Umlenken der betreffenden Kohlenstofffaserlagen in den aufgefächerten Bereich des Schaufelfußes sowie in dem in der Ausnehmung der Rotorscheibe liegenden Teil des Schaufelfußes eine Druckspannungseinflusszone, in der die Kohlenstofffaserzwischenschichten angeordnet sind und in der die Kohlenstofffaserlagen parallel zu den Flanken im aufgefächerten Bereich des Schaufelfußes verlaufen. Die Seitenflächen des Schaufelfußes sind mit einer duktilen Glasfaseraußenschicht abgedeckt.

Der Radius im Übergangsbereich ist so gestaltet, dass keine kritischen Biegespannungen auftreten. Über die Glasfaseraußenschicht werden die Druckkräfte im rechten Winkel zu den Faserlagen in die Druckspannungseinflusszone im Schaufelfuß eingetragen, in der die Kohlenstofffaserlagen nicht mehr umgelenkt werden, sondern parallel zu den Flanken verlaufen, um die Druckspannungsfestigkeit der Kohlenstofffaserlagen in vollem Umfang auszunutzen und in der Druckeinflusszone eine hohe Druckspannung aufnehmen zu können. Da erfindungsgemäß der Kunststoffanteil zwischen den Kunststofffaserlagen in der Druckspannungseinflusszone aufgrund der Zwischenschichten und einer durch lokalen Druck bei der Fertigung begrenzten Kunststoffinfiltration in diesem Bereich gering ist, können die Kräfte unmittelbar zwischen den Faserlagen übertragen werden. Gleichzeitig werden dadurch eine Festigkeitsverminderung und Steifigkeitssprünge verhindert.
Gemäß einem weiteren wichtigen Merkmal der Erfindung ist die quasi-unidirektional verstärkte Kohlenstofffaser-Kunststoff-Tragstruktur mit einer mit einer zwischen dieser und der Glasfaseraußenschicht verlaufenden +/-45°-Kohlenstofffaserschicht abgedeckt, um die Torsionsfestigkeit der Schaufel zu verbessern und im Flankenbereich des Schaufelfußes eine weiter verbesserte Krafteinleitung in die quasi-unidirektional verstärkte Kohlenstofffaser-Kunststoff-Tragstruktur zu erreichen.

Mit dieser Ausbildung eines aus einem Textilverbundwerkstoff gefertigten hochfesten Schaufelfußbereiches ist eine sichere Befestigung der Schaufel an der Rotorscheibe gewährleistet. Die an der Schaufel wirkenden Axialkräfte und Biegelasten werden in den Schaufelfuß eingeleitet und von diesem aufgenommen. Eine Delamination der Faserschichten und ein Ablösen der Flanken wird verhindert. Der Fan kann bei verringerter Baugröße und verringertem Gewicht mit entsprechend hoher Drehzahl betrieben werden.

Gemäß einem weiteren wichtigen Merkmal der Erfindung deckt die Glasfaseraußenschicht die Schaufelfußflanke bis zum Übergangsbereich hin ab und läuft in der kraftgerechten Übergangszone mit abnehmender Schichtdicke aus, um ein Ablösen der Flanke aufgrund hoher Druckbeanspruchungen im Schaufelfuß zu verhindern. Eine Flankenablösung und Delaminationen im Übergangsbereich kann zusätzlich auch durch eine Verstärkung der Faserlagen in Dickenrichtung mit gespitzten Glas- oder Kohlenstofffaserkunststoffstiften entgegengewirkt werden.

Gemäß einem noch anderen Merkmal der Erfindung erfolgt die Umleitung der Kohlenstofffaserlagen vom Schaufelblatt in den Schaufelfuß mit einem Übergangsradius, der kritische Biegespannungen vermeidet, und zwar in der kraftgerechten Übergangszone entsprechend der Krümmung einer Ellipse mit einem Ellipsenverhältnis von 3:1. In der Druckspannungseinflusszone verlaufen die Faserlagen jedoch parallel zu den Flanken und somit gerade. Entsprechend dem zur Flanke parallelen Faserlagenverlauf in der Druckspannungseinflusszone und der Umlenkung der Faserlagen im Übergangsbereich erstrecken sich die Kohlenstofffaserzwischenschichten in unterschiedlicher Länge und mit allmählich auslaufender Schichtdicke in den Übergangsbereich.

Die Herstellung der erfindungsgemäß ausgebildeten Schaufel erfolgt durch Infiltration von Kunststoff in ein Formwerkzeug mit eingelegten Faserlagen über den Schaufelfuß, wobei im Bereich des Schaufelfußes ein lokaler Druck aufgebracht wird, der größer als der Druck zur Infiltration des Kunstharzes ist. Das führt in diesem Bereich zu einer Verdichtung der Faserlagen und einer Erhöhung der Verbundfestigkeit. Die Faserlagen liegen zur Verbesserung der Druckübertragung im Schaufelfuß und damit einer sicheren Schaufelhalterung im Triebwerksbetrieb eng aufeinander. Der Schaufelfuß muss an der Außenfläche noch mechanisch nachgearbeitet werden.

Ein Ausführungsbeispiel der Erfindung wird anhand der Zeichnung näher erläutert. Es zeigen:

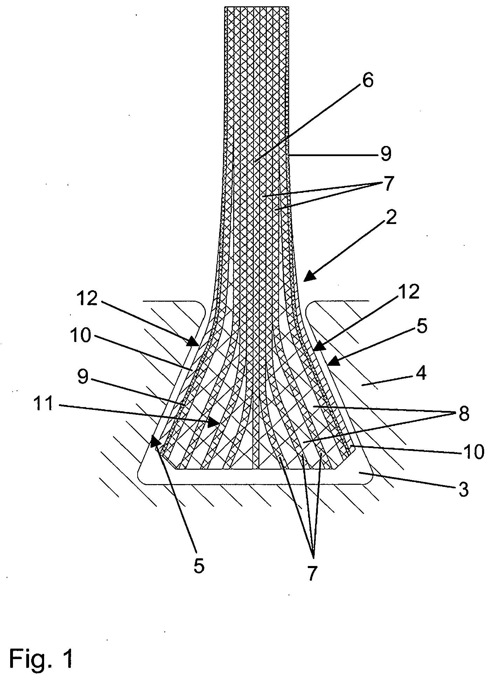

- Fig. 1: eine Schnittansicht eines in einer Ausnehmung einer Rotorscheibe angeordneten Schaufelfußes einer Fanschaufel; und
- Fig. 2: eine Ansicht des Schaufelfußes nach Fig. 1 mit dem durch die spezifische Faserlagenanordnung erzielten Übergangsbereich und der Druckspannungseinflusszone.

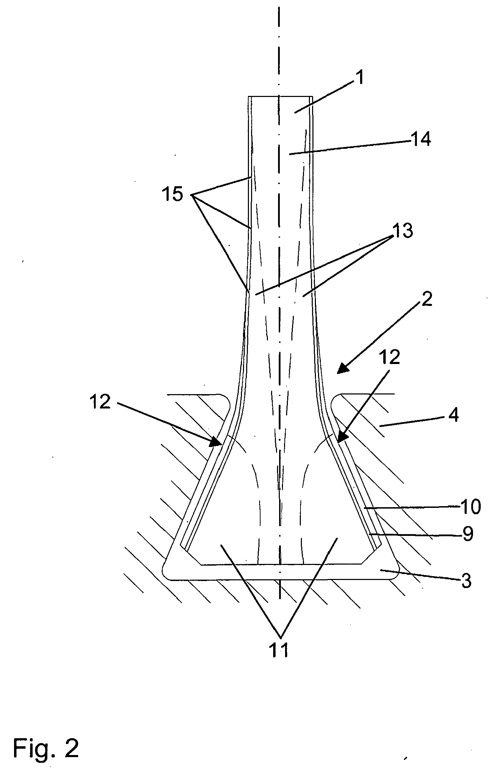

Ein an ein nur teilweise dargestelltes Schaufelblatt 1 anschließender Schaufelfuß 2 ist in einer Ausnehmung 3 einer Rotorscheibe 4 angeordnet. Der Schaufelfuß 2 umfasst eine - sich im Schaufelblatt 1 fortsetzende - quasi-unidirektional verstärkte Kohlenstofffaser-Kunststoff-Tragstruktur 6, die aus einer mit Kunststoff infiltrierten Vielzahl aneinander liegender Kohlenstofffaserlagen 7 besteht. Die Kohlenstofffaserlagen 7 verlaufen über die gesamte Länge der Fanschaufel, das heißt, vom Schaufelblatt 1 bis zum Boden des Schaufelfußes 2, und zwar, wie Fig. 2 zeigt, zum Teil in eine sich zum Schaufelfuß 2 hin verjüngende Schaufelblattwurzel 14. Am Anfang der Schaufelblattwurzel 14 beginnt eine äußere kraftgerechte Übergangszone 15 (Soft-Transition-Zone) eines Übergangsbereiches 13, in der bereits die ersten - äußeren - Kohlenstofffaserlagen 7 zur Bildung des Schaufelfußes 2 mit einer bestimmten Krümmung nach außen abgelenkt werden, um aus der zur Schaufelblattachse parallelen Lage allmählich in eine zu den geradem Flanken 12 des Schaufelfußes 2 parallele Lage überzugehen. Der Übergangsradius der Kohlenstofffaserlagen 7 im Übergangsbereich 13 ist so gewählt, das keine kritischen Biegespannungen auftreten. Zur optimalen Lastübertragung in den Schaufelfuß 2 und zur Verminderung der Delaminationsneigung entspricht der Übergang in der äußeren kraftgerechten Übergangszone 15 der Krümmung eines Teils einer Ellipse mit einem Ellipsenverhältnis von 3:1. In der im Schaufelfuß 2 ausgebildeten Druckspannungseinflusszone 11, in der die Faserlagen parallel zu den Flanken 5, 12 der Ausnehmung 3 bzw. des Schaufelfußes 2 verlaufen, erfolgt keine Umlenkung.

Im Schaufelfuß 2, und zwar im Wesentlichen beschränkt auf den in der Ausnehmung 3 liegenden Teil, sind zwischen den Kohlentofffaserlagen 7 Kohlenstofffaserzwischenschichten 8 angeordnet. Die Kohlenstofffaserzwischenschichten 8 sorgen für eine Auffächerung der Kohlenstofffaserlagen 7 entsprechend der Geometrie des Schaufelfußes 2 und verhindern die Ausbildung harzreicher Stellen bei der Kunststoffinfiltration, so dass eine Festigkeitsreduzierung und Steifigkeitssprünge in diesem Bereich verhindert werden. Die Kohlenstofffaserzwischenschichten 8 sind in der Länge unterschiedlich dimensioniert, und zwar so, dass die Kohlenstofffaserlagen 7 und die Kohlenstofffaserzwischenschichten 8 in der Druckspannungseinflusszone 11 parallel zu den Flanken 12 des Schaufelfußes 2 verlaufen, um so die - begrenzte - Druckfestigkeit der Kohlenstofffaserlagen und -zwischenschichten in vollem Umfang auszunutzen.

An den Außenflächen der quasi-unidirektionalen Kohlenstofffaser-Kunststoff-Tragstruktur 6 befindet sich eine +/-45°-Kohlenstofffaserschicht 9, deren Faserrichtung im Winkel von +45° und -45° zur Faserrichtung der Kohlenstofffaser-Kunststoff-Tragstruktur 6 verläuft. Die +/-45°-Kohlenstofffaserschicht 9 dient zur Verbesserung der Krafteinleitung in die quasi-unidirektional verstärkte Kohlenstofffaser-Kunststoff-Tragschicht 6.

Die Flanken 12 des Schaufelfußes 2 sind schließlich jeweils mit einer Glasfaseraußenschicht 10 abgedeckt, die über die durch die parallelen Faserlagen gebildete Druckspannungseinflusszone 11 hinaus bis in den Übergangsbereich 13 reicht. Die Stärke der Glasfaseraußenschicht 10 nimmt im Übergangsbereich allmählich ab, um ein vorzeitiges Ablösen der Flanke in der Übergangszone 15, hervorgerufen durch das Nachgeben des Schaufelfußes 2 infolge der hohen Druckbeanspruchung, zu verhindern.

Ein Ablösen im Bereich der Flanken 12 und eine Delamination im Übergangsbereich 13 können zusätzlich noch dadurch verhindert werden, dass die Kohlenstofffaserlagen 7 im Übergangsbereich 13 in Dickenrichtung durch gespitzte Kohlenstofffaserkunststoffstifte (nicht dargestellt) verstärkt werden.

Die Herstellung der aus einem Textilverbundwerkstoff bestehenden Fanschaufel erfolgt durch Einlegen der Vielzahl der oben beschriebenen Faserlagen 7 bis 10 und -stifte in der oben angegebenen Anordnung in ein Formwerkzeug, wobei in das geschlossene Formwerkzeug anschließend unter Druck ein Kunstharz infiltriert wird. Während der Kunstharzinfiltration wird jedoch am Schaufelfußes 2 im Bereich der Flanken 12 bzw. der Druckspannungseinflusszone 11 ein lokaler Druck aufgebracht, der größer als der Infiltrationsdruck des Kunstharzes ist und gegen diesen wirkt, so dass die Faserlagen im Schaufelfuß zur Gewährleistung einer effizienten Druckübertragung in diesem Bereich dicht aufeinander liegen. Während der infiltrierte Schaufelbereich bereits die erforderliche Oberflächenstruktur aufweist, wird die Oberfläche des während der Herstellung unmittelbar mit einem Druckmittel beaufschlagten Schaufelfußes 2 anschließend noch mechanisch bearbeitet.

### Bezugszeichenliste

- 1: Schaufelblatt
- 2: Schaufelfuß
- 3: Ausnehmung in 4
- 4: Rotorscheibe
- 5: Flanke v. 3
- 6: Kohlenstofffaser-Kunststoff-Tragstruktur
- 7: Kohlenstofffaserlagen v. 6
- 8: Kohlenstofffaserzwischenschichten
- 9: +/-45°-Kohlenstofffaserschichten
- 10: Glasfaseraußenschicht
- 11: Druckspannungseinflusszone
- 12: Flanken v. 2
- 13: Übergangsbereich
- 14: Schaufelblattwurzel
- 15: äußere kraftgerechte Übergangszone v. 13

## Patentansprüche

1. Fanschaufel aus Textilverbundwerkstoff für das Gebläse eines Gasturbinentriebwerks, die ein Schaufelblatt (1) und einen in einer Ausnehmung (3) einer Rotorscheibe (4) haltbaren Schaufelfuß (2) umfasst, wobei eine Vielzahl parallel zur Schaufelblattachse verlaufender, eine quasi-unidirek-tional verstärkte Kohlenstofffaser-Kunststoff-Tragstruktur (6) bildender Kohlenstofffaserlagen (7), die eine sich im Schaufelfuß (2) verjüngende Schaufelblattwurzel (14),
einen vom Anfang der Schaufelblattwurzel (14) beidseitig ausgehenden Übergangsbereich (13), in dem die Kohlenstofffaserlagen (7) von der zur Schaufelblattachse parallelen Lage über eine äußere kraftgerechte Übergangszone (15) in eine entsprechend der Geometrie des Schaufelfußes (2) aufgefächerte Lage umgelenkt werden, und
eine Druckspannungseinflusszone (11), in der die zuvor umgelenkten Kohlenstofffaserlagen (7) parallel zu den in der Ausnehmung (3) der Rotorscheibe (4) liegenden Flanken (12) des Schaufelfußes (2) verlaufen, bilden, und
wobei auf den beiden Flanken (12) des Schaufelfußes (2) jeweils eine Glasfaseraußenschicht (10) angeordnet ist,
**dadurch gekennzeichnet,**
**dass** zwischen den aufgefächerten Kohlenstofffaserlagen (7) jeweils Kohlenstofffaserzwischenschichten (8) angeordnet sind,
die entsprechend der Geometrie der Druckspannungseinflusszone (11) unterschiedlich weit und mit sich verjüngender Schichtdicke in den Übergangsbereich (13) hineinlaufen.

2. Fanschaufel nach Anspruch 1, **dadurch gekennzeichnet, dass** an den gegenüberliegenden Seitenflächen der Schaufel jeweils eine zwischen der Tragstruktur (6) und der Glasfaseraußenschicht (10) liegende +/-45°-Kohlenstofffaserschicht (9) angeordnet ist.

3. Fanschaufel nach Anspruch 1 oder 2, **dadurch gekennzeichnet, dass** die Glasfaseraußenschicht (10) entlang der Flanken (12) des Schaufelfußes (2) bis zum Übergangsbereich (13) verläuft.

4. Fanschaufel nach Anspruch 3, **dadurch gekennzeichnet, dass** die Glasfaseraußenschicht (10) in der kraftgerechten Übergangszone (15) mit abnehmender Schichtdicke allmählich ausläuft.

5. Fanschaufel nach Anspruch 1, durch gekennzeichnet, dass der Umlenkungsradius der Faserlagen in der Übergangszone (15) dem Kurvenverlauf einer Ellipse mit einem Ellipsenverhältnis von 3:1 entspricht.

6. Fanschaufel nach einem der Ansprüche 1 bis 5, **dadurch gekennzeichnet, dass** die Kohlenstofffaserlagen (7) im Übergangsbereich (13) in Dickenrichtung durch gespitzte Glas- oder Kohlenstofffaserkunststoffstifte verstärkt sind.

7. Fanschaufel nach einem der Ansprüche 1 bis 6, **dadurch gekennzeichnet, dass** der Kunststoffanteil zwischen den Faserlagen in der Druckspannungseinflusszone aufgrund eines in diesem Bereich während der Kunststoffinfiltration aufgebrachten erhöhten lokalen Drucks und einer stärkeren Verdichtung der Faserlagen geringer als in den nicht lokal druckbeaufschlagten Schaufelbereichen ist.

## Claims

1. Fan blade made of a textile composite material for the fan of a gas-turbine engine, which blade comprises an airfoil (1) and a blade root (2) retainable in a recess (3) of a rotor disk (4), where a plurality of carbon fiber layers (7) extending parallel to the airfoil axis and forming a quasi unidirectionally reinforced carbon fiber-plastic carrying structure (6), make up an airfoil root (14) tapering in the blade root (2), a transition area (13) extending from the start of the airfoil root (14) on both sides, and in which the carbon fiber layers (7) are diverted from the position parallel to the airfoil axis via an outer, load-adequate transition zone (15) to a position splayed in accordance with the geometry of the blade root (2), and a compressive stress-affected zone (11), in which the previously diverted carbon fiber layers (7) extend parallel to the flanks (12) of the blade root (2) arranged in the recess (3) of the rotor disk (4), and where a glass fiber outer layer (10) is located on each of the two flanks (12) of the blade root (2),
**characterized in that**
carbon fiber intermediate layers (8) are arranged respectively between the splayed carbon fiber layers (7), said intermediate layers (8) extending with different length and with decreasing layer thickness into the transition area (13) in accordance with the geometry of the compressive stress-affected zone (11).

2. Fan blade in accordance with Claim 1, **characterized in that** at opposite sides of the blade a carbon fiber layer (9) is arranged at +/- 45° respectively between the carrying structure (6) and the glass fiber outer layer (10).

3. Fan blade in accordance with Claim 1 or 2, **characterized in that** the glass fiber outer layer (10) extends along the flanks (12) of the blade root (2) to the transition area (13).

4. Fan blade in accordance with Claim 3, **characterized in that** the glass fiber outer layer (10) gradually runs out in the load-adequate transition zone (15) with decreasing layer thickness.

5. Fan blade in accordance with Claim 1, **characterized in that** the defection radius of the fiber layers in the transition zone (15) corresponds to the curvature of an ellipse with an ellipticity ratio of 3:1.

6. Fan blade in accordance with one of the Claims 1 to 5, **characterized in that** the carbon fiber layers (7) in the transition area (13) are reinforced in the thickness direction with pointed glass or carbon fiber-plastic pins.

7. Fan blade in accordance with one of the Claims 1 to 6, **characterized in that** the plastic share between the fiber layers in the compressive stress-affected zone is lower than in the blade areas not subjected to local pressure, this being due to the fact that the local pressure applied in this area during plastic infiltration is increased and the compression of the fiber layers is higher.

## Revendications

1. Aube de soufflante en matière textile composite pour la soufflante d'un moteur à turbine à gaz, comprenant une pale (1) et un pied d'aube (2) pouvant être maintenu dans un évidement (3) d'un disque de rotor (4), sachant qu'une pluralité de couches de fibres de carbone s'étendant (7) parallèlement à l'axe de pale et constituant une structure portante (6) quasi unidirectionnelle en plastique renforcé par des fibres de carbone, forment un pied de pale (14) se rétrécissant dans le pied d'aube (2), un espace de transition (13) partant des deux côtés du début du pied de pale (14) et dans lequel les couches de fibres de carbone (7) sont déviées, de la position parallèle à l'axe de pale par l'intermédiaire d'une zone de transition (15) extérieure adaptée aux efforts à une position ramifiée correspondant à la géométrie du pied d'aube (2), et une zone d'influence de contrainte de compression (11) dans laquelle les couches de fibres de carbone (7) auparavant déviées s'étendent parallèlement aux flancs (12) du pied d'aube (2) situés dans l'évidement (3) du disque de rotor (4), et sachant que sur chacun des deux flancs (12) du pied d'aube (2) est disposée une couche extérieure de fibres de verre (10),
**caractérisée en ce**
**qu'**entre les couches de fibres de carbone (7) ramifiées sont respectivement disposées des couches intermédiaires de fibres de carbone (8) qui conformément à la géométrie de la zone d'influence de contrainte de compression (11) ont des largeurs différentes et entrent dans l'espace de transition (13) sous réduction de l'épaisseur de couche.

2. Aube de soufflante selon la revendication n° 1, **caractérisée en ce que** sur les surfaces latérales opposées de l'aube est respectivement disposée une couche de fibres de carbone (9) à +/- 45° entre la structure portante (6) et la couche extérieure de fibres de verre (10).

3. Aube de soufflante selon la revendication n° 1 ou n° 2, **caractérisée en ce que** la couche extérieure de fibres de verre (10) s'étend le long des flancs (12) du pied d'aube (2) jusqu'à l'espace de transition (13).

4. Aube de soufflante selon la revendication n° 3, **caractérisée en ce que** la couche extérieure de fibres de verre (10) se termine progressivement avec réduction de son épaisseur dans la zone de transition (15) adaptée aux efforts.

5. Aube de soufflante selon la revendication n° 1, **caractérisée en ce que** le rayon de déviation des couches de fibres dans la zone de transition (15) correspond à l'allure d'une ellipse avec un rapport d'ellipticité de 3:1.

6. Aube de soufflante selon une des revendications n° 1 à n° 5, **caractérisée en ce que** les couches de fibres de carbone (7) dans l'espace de transition (13) sont renforcées dans le sens de l'épaisseur par des broches appointées en plastique renforcé par des fibres de verre ou de carbone.

7. Aube de soufflante selon une des revendications n° 1 à n° 6, **caractérisée en ce que** la part de plastique entre les couches de fibres dans la zone d'influence de contrainte de compression est inférieure à celle dans les zones d'aube non localement soumises à la pression en raison d'une pression locale plus élevée appliquée dans ladite zone lors de l'infiltration du plastique, et d'une plus forte compression des couches de fibres.
